# EUROPÄISCHE PATENTANMELDUNG

(11) **EP 4 248 809 A1**
(43) Veröffentlichungstag der Anmeldung: **27.09.2023**
(21) Anmeldenummer: 22163403.3
(22) Anmeldetag: 22.03.2022
(51) Int. Cl.: A47J 36/32, A47J 43/07, A47J 27/00

(54) **SPEISENZUBEREITUNGSGERÄT MIT SCHUTZEINRICHTUNG VOR ÜBERHITZUNG**

(71) Anmelder: Vorwerk & Co. Interholding GmbH, 42270 Wuppertal (DE)
(72) Erfinder: TIETZ, Sebastian, 51379 Leverkusen (DE); FECKLER, Gereon, 41542 Dormagen (DE); KRAUT-REINKOBER, Stefan, 51375 Leverkusen (DE); YAN, Wenjie, 40549 Düsseldorf (DE); LANG, Torsten, 42657 Solingen (DE)
(74) Vertreter: Gille Hrabal Partnerschaftsgesellschaft mbB Patentanwälte

(57) **Zusammenfassung**

Die Erfindung betrifft ein Speisenzubereitungsgerät mit einem Thermistor (2) als Heizeinrichtung für das Erhitzen einer Speise durch das Speisenzubereitungsgerät (7), mit einem Temperatursensor (4) für das Messen einer durch das Erhitzen erzeugten realen Temperatur und einer Schutzeinrichtung (17), die so eingerichtet ist, dass diese die Heizeinrichtung abschaltet oder die Heizleistung der Heizeinrichtung zumindest reduziert, wenn durch den Temperatursensor (4) eine Temperatur ermittelt wird, die oberhalb einer ersten vorgegebenen Temperatur liegt, dadurch gekennzeichnet, dass das Speisenzubereitungsgerät (7) so eingerichtet ist, dass auch mit dem Thermistor (2) eine Temperatur ermittelt wird und die Schutzeinrichtung (17) so eingerichtet ist, dass diese die Heizeinrichtung auch in Abhängigkeit von der ermittelten Temperatur abschaltet oder die Heizleistung der Heizeinrichtung in Abhängigkeit von der ermittelten Temperatur zumindest reduziert, die mithilfe des Thermistors (2) ermittelt wird.

Mit geringem technischen Aufwand kann so zuverlässig vermieden werden, dass das Speisenzubereitungsgerät (7) übermäßig heiß werden kann.

## Beschreibung

Die Erfindung betrifft ein Speisenzubereitungsgerät mit einem Thermistor als Heizeinrichtung für das Erhitzen einer Speise durch das Speisenzubereitungsgerät. Das Speisenzubereitungsgerät umfasst einen Temperatursensor für das Messen einer durch das Erhitzen erzeugten Realtemperatur und eine Schutzeinrichtung, die vor einem übermäßigen Erhitzen schützt. Mit Realtemperatur ist eine tatsächlich herrschende Temperatur gemeint und nicht eine Temperatur, die durch eine Messeinrichtung ermittelt worden ist.

Speisen werden für ihre Zubereitung regelmäßig erwärmt oder erhitzt. Dies geschieht beispielsweise mithilfe eines Herdes, der über wenigstens eine Heizplatte in Form einer Kochplatte verfügt. Eine Kochplatte ist eine Platte, die durch eine Heizeinrichtung erhitzt werden kann.

Als Heizeinrichtung kann ein Thermistor dienen. Fließt ein elektrischer Strom durch den Thermistor, so erwärmt oder erhitzt sich der Thermistor. Der elektrische Widerstand des Thermistors ändert sich mit der Realtemperatur reproduzierbar.

Mit Thermistor ist also ein elektrischer Leiter gemeint, der sich erwärmt oder erhitzt, wenn ein elektrischer Strom durch den elektrischen Leiter fließt. Die Größe des elektrischen Widerstands hängt von der Realtemperatur ab.

Aus den Druckschriften EP 3 764 739 A1 sowie EP 3 808 235 A1 sind Speisenzubereitungsgeräte mit Thermistor für ein Erhitzen von Speisen bekannt. Um Realtemperaturen während der Zubereitung einer Speise messen zu können, weist das aus der Druckschrift EP 3 764 739 A1 bekannte Speisenzubereitungsgerät einen Temperatursensor auf. Das aus der Druckschrift EP 3 808 235 A1 bekannte Speisenzubereitungsgerät nutzt den elektrischen Widerstand seines Thermistors zur Ermittlung der Realtemperatur während der Zubereitung einer Speise.

Aufgabe der Erfindung ist die Schaffung eines Speisenzubereitungsgeräts, welches mit geringem technischen Aufwand ein Überhitzen vermeiden kann.

Die Aufgabe der Erfindung wird durch ein Speisenzubereitungsgerät mit den Merkmalen des ersten Anspruchs gelöst. Vorteilhafte Ausgestaltungen der Erfindung sind in den abhängigen Ansprüchen angegeben.

Zur Lösung der Aufgabe umfasst das Speisenzubereitungsgerät einen Thermistor als Heizeinrichtung. Das Speisenzubereitungsgerät kann durch Erhitzen des Thermistors eine Speise erhitzen und so zubereiten. Durch den Thermistor fließt für das Erhitzen während des Betriebs des Speisenzubereitungsgerät ein elektrischer Strom. Dadurch können beispielsweise ein Garraum des Speisenzubereitungsgeräts oder beispielsweise ein Boden und/oder eine Wand eines Speisenzubereitungsgefäßes des Speisenzubereitungsgeräts erhitzt werden. Befindet sich eine Speise in dem Garraum bzw. in dem Speisenzubereitungsgefäß, dann wird auch die Speise erhitzt.

Das Speisenzubereitungsgerät umfasst einen Temperatursensor. Durch den Temperatursensor soll die Realtemperatur ermittelt werden, die durch das Erhitzen erzeugt wird. Im Idealfall stimmen Realtemperatur und ermittelte Temperatur überein. Der Temperatursensor kann beispielsweise in einer Wand oder in einem Boden des genannten Garraums bzw. des genannten Speisenzubereitungsgefäßes integriert sein. Der Temperatursensor kann beispielsweise beim Thermistor angeordnet sein. Der Temperatursensor kann sich beispielsweise zwischen Leiterbahnabschnitten des Thermistors befinden.

Das Speisenzubereitungsgerät umfasst eine Schutzeinrichtung, die so eingerichtet ist, dass diese die Heizeinrichtung aus Sicherheitsgründen grundsätzlich abschaltet, wenn durch den Temperatursensor eine Temperatur ermittelt wird, die oberhalb eines ersten vorgegebenen Temperaturschwellwerts liegt. Es ist allerdings nicht ausgeschlossen, dass die Leistung der Heizeinrichtung erst einmal lediglich reduziert wird. Reicht diese Maßnahme nicht aus, um eine zu hohe Realtemperatur zu vermeiden, so kann in einem zweiten Schritt die Heizeinrichtung dann vollständig abgeschaltet werden. Durch die Schutzeinrichtung werden auch dann übermäßig hohe Realtemperaturen vermieden.

Das Speisenzubereitungsgerät ist so eingerichtet, dass auch mit dem Thermistor eine Temperatur ermittelt wird. Es wird also ausgenutzt, dass der elektrische Widerstand des Thermistors von der Realtemperatur abhängt. Das Speisenzubereitungsgerät verfügt über eine Einrichtung, mit der der elektrische Widerstand des Thermistors während des Betriebs ermittelt wird. Der ermittelte elektrische Widerstand des Thermistors ist dann ein Maß für die ermittelte Temperatur. Die Schutzeinrichtung ist so eingerichtet, dass diese die Heizeinrichtung auch in Abhängigkeit von der ermittelten Temperatur abschaltet oder die Heizleistung der Heizeinrichtung in Abhängigkeit von der ermittelten Temperatur zumindest reduziert. Mit ermittelter Temperatur ist hier die mithilfe des Thermistors ermittelte Temperatur gemeint.

Das Speisenzubereitungsgerät verfügt damit über eine Schutzeinrichtung, die besonders zuverlässig vor übermäßig hohen Realtemperaturen zu schützen vermag. Die Schutzeinrichtung kann daher so eingerichtet sein, dass diese die Heizeinrichtung abschaltet oder die Heizleistung der Heizeinrichtung zumindest reduziert, wenn durch den Thermistor eine Temperatur ermittelt wird, die oberhalb eines zweiten vorgegebenen Temperaturschwellwerts liegt.

Der erste vorgegebene Temperaturschwellwert für den Temperatursensor ist vorzugsweise kleiner als der zweite vorgegebene Temperaturschwellwert für den Thermistor. Ein Temperatursensor ist grundsätzlich besser zur Ermittlung einer Realtemperatur geeignet als ein Thermistor. Der Thermistor soll schließlich vor allem erhitzen. Entsprechend optimiert wird ein Thermistor konstruiert. Im Unterschied dazu ist der Temperatursensor grundsätzlich dahingehend optimiert, dass dieser besonders schnell und zutreffend eine Realtemperatur ermitteln kann. Ist der erste vorgegebene Temperaturschwellwert kleiner als der zweite vorgegebene Temperaturschwellwert, dann wird dadurch erreicht, dass die Schutzeinrichtung in der Regel immer nur in Abhängigkeit von der Temperaturmesseinrichtung abschaltet, die für die Messung einer Temperatur am besten geeignet ist.

Wird eine Speise gekocht, so liegt die Realtemperatur bei ca. 100°C. In einem Kochtopf oder in einem damit vergleichbaren Zubereitungsgefäß können auch Realtemperaturen von mehr als 100°C erreicht werden. In solchen Zubereitungsgefäßen sind Realtemperaturen von 200°C für die Zubereitung einer Speise grundsätzlich nicht vorgesehen. Es ist daher zweckmäßig, dass ein jeder vorgegebener Temperaturschwellwert deutlich mehr als 100°C beträgt, so zum Beispiel wenigstens 180°C oder wenigstens 200°C. Eine sinnvolle Auswahl besteht daher deshalb beispielsweise darin, dass der erste vorgegebene Temperaturschwellwert wenigstens 180°C beträgt, also zum Beispiel 200°C. Die zweite vorgegebene Temperaturschwellwert kann sinnvollerweise wenigstens 210°C betragen, so zum Beispiel 230°C. Da bei fast allen haushaltsüblichen Kochgeräten die vorgesehenen Realtemperaturen weniger als 230°C betragen, ist es sinnvoll, als Obergrenze für die vorgegebenen Temperaturschwellwerte 260°C vorzusehen. Als Obergrenze für den ersten vorgegebenen Temperaturschwellwert kann daher 220°C vorgesehen sein. Als Obergrenze für den zweiten vorgegebenen Temperaturschwellwert kann daher 250°C vorgesehen sein. Diese Obergrenzen sind vor allem für solche Speisenzubereitungsgeräte sinnvoll, die einen Kochtopf oder ein damit vergleichbares Speisenzubereitungsgefäß umfassen. Ein Beispiel für ein damit vergleichbares Speisenzubereitungsgefäß ist ein Speisenzubereitungsgefäß einer Küchenmaschine, die eine in dem Speisenzubereitungsgefäß befindliche Speise bzw. ein in dem Speisenzubereitungsgefäß befindliches Lebensmittel rühren und/oder zerkleinern sowie erhitzen kann.

Die Schutzeinrichtung kann so eingerichtet sein, dass diese die Heizeinrichtung abschaltet oder die Heizleistung der Heizeinrichtung zumindest reduziert, wenn die Temperaturdifferenz zwischen der ermittelten Temperatur, die durch den Temperatursensor ermittelt wird, und der ermittelten Temperatur, die durch den Thermistor ermittelt wird, größer als eine vorgegebene Temperaturdifferenz ist. Durch diese Ausgestaltung wird das ordnungsgemäße Ermitteln von Temperaturen überwacht. Es wird so für eine sehr hohe Zuverlässigkeit gesorgt. Ist eine der beiden Temperaturermittlungen gestört, so macht sich dies durch eine entsprechend große Temperaturdifferenz bemerkbar. Eine so ermittelte Störung einer Temperaturermittlung hat dann zur Konsequenz, dass die Heizeinrichtung abgeschaltet oder die Heizleistung zumindest reduziert wird. Die sofortige Abschaltung ist aus Zuverlässigkeitsgründen zu bevorzugen.

Eine vorgegebene Temperaturdifferenz kann beispielsweise wenigstens 20°C oder wenigstens 30°C betragen, um zuverlässig relevante Störungen von Temperaturmessungen erkennen zu können. Eine vorgegebene Temperaturdifferenz sollte aus Zuverlässigkeitsgründen 60°C nicht übersteigen. Eine vorgegebene Temperaturdifferenz kann beispielsweise 35°C bis 45°C betragen. Eine vorgegebene Temperaturdifferenz kann beispielsweise 40 °C bzw. 40 K betragen.

Eine besonders große Zuverlässigkeit wird erreicht, wenn von sämtlichen der genannten Kriterien bzw. Möglichkeiten Gebrauch gemacht wird. Besonders zu bevorzugen ist daher, dass die Heizeinrichtung abgeschaltet wird, wenn von dem Temperatursensor eine Temperatur ermittelt wird, die oberhalb des ersten vorgegebenen Temperaturschwellwerts liegt. Die Heizeinrichtung wird abgeschaltet, wenn von dem Thermistor eine Temperatur ermittelt wird, die oberhalb des zweiten vorgegebenen Temperaturschwellwerts liegt. Die Heizeinrichtung wird abgeschaltet, wenn die Temperaturdifferenz zwischen der Temperatur, die durch den Temperatursensor ermittelt wird, und der Temperatur, die durch den Thermistor ermittelt wird, größer als eine vorgegebene Temperaturdifferenz ist.

Es ist das Ziel, dass die Schutzeinrichtung zuverlässig verhindert, dass eine übermäßig hohe Realtemperatur erreicht werden kann. Eine übermäßig hohe Realtemperatur kann beispielsweise 300 °C betragen. Die Schutzeinrichtung ist dann beispielsweise so eingerichtet, dass diese die Zufuhr von Strom zum Thermistor unterbricht, bevor beispielsweise 295 °C erreicht werden. So wird besonders sicher vermieden, dass eine Realtemperatur von 300 °C erreicht werden kann. Bevorzugt sind erster und zweiter vorgegebener Temperaturschwellwert sowie die vorgegebene Temperaturdifferenz daher so ausgewählt, dass selbst im Fall einer Störung des Temperatursensors oder des Thermistors eine Stromzufuhr zum Thermistor abgeschaltet wird, sodass spätestens vor Erreichen einer Realtemperatur von 295 °C abgeschaltet wird.

Vorzugsweise ist das Speisenzubereitungsgerät zur weiteren Verbesserung so eingerichtet ist, dass nach einem Abschalten der Heizeinrichtung durch die Schutzeinrichtung die Heizeinrichtung nur dann wiedereingeschaltet werden kann, wenn
- durch den Temperatursensor eine Temperatur ermittelt wird, die unterhalb des ersten vorgegebenen Temperaturschwellwerts liegt,
- durch den Thermistor eine Temperatur ermittelt wird, die unterhalb des zweiten vorgegebenen Temperaturschwellwerts liegt, und
- die Temperaturdifferenz zwischen der Temperatur, die durch den Temperatursensor ermittelt wird, und der Temperatur, die durch den Thermistor ermittelt wird, kleiner als eine vorgegebene Temperaturdifferenz ist.

Der Temperatursensor kann vorzugsweise eine Temperatur lokal so ermitteln, dass diese ermittelte Temperatur dann weiterverwendet werden kann, um die Realtemperatur im Speisenzubereitungsgefäß möglichst genau zu bestimmen.

Das Speisenzubereitungsgerät kann eine Steuerungseinheit umfassen, die so eingerichtet ist, dass das Erhitzen durch die Heizeinrichtung in Abhängigkeit von der ermittelten Temperatur gesteuert werden kann, die durch den Temperatursensor ermittelt wird. Vorzugsweise kann eine Solltemperatur eingestellt werden, die erreicht werden soll. Die Steuerungseinheit kann dann die Heizeinrichtung so steuern, dass die eingestellte Solltemperatur erreicht und gehalten wird. Das Einstellen einer gewünschten Solltemperatur kann beispielsweise manuell über eine Eingabeeinrichtung des Speisenzubereitungsgeräts erfolgen. Das Einstellen einer gewünschten Solltemperatur kann beispielsweise gesteuert durch die Steuerungseinheit über eine Eingabeeinrichtung des Speisenzubereitungsgeräts erfolgen, so zum Beispiel aufgrund eines elektronisch gespeicherten Rezepts, auf das die Steuerungseinheit zugreifen kann. In dem Rezept sind dann entsprechende Informationen hinterlegt, die das Einstellen ermöglichen.

Der Thermistor ist vorzugsweise ein Kaltleiter, also ein PTC Widerstand. Es können dann übliche Metalle verwendet werden, um den technischen Aufwand für die Herstellung der Heizeinrichtung gering halten zu können. So kann der Kaltleiter auf Basis von Kupfer, Aluminium oder Eisen gefertigt sein.

Der Temperatursensor umfasst als Sensor vorzugsweise einen Heißleiter und zwar vor allem dann, wenn der Thermistor der Heizeinrichtung ein Kaltleiter ist. Es wird so sichergestellt, dass für die Ermittlung von Temperaturen verschiedene und verschieden wirkende Materialien eingesetzt werden, was die Zuverlässigkeit weiter verbessern kann. Als Heißleiter kann ein Halbleiter verwendet werden. Verbindungshalbleiter oder entsprechende metallische Legierungen kommen ebenfalls in Betracht. Es wird dann der elektrische Widerstand des Heißleiters gemessen und anhand des gemessenen Wertes die Temperatur ermittelt, die im Idealfall mit der Realtemperatur übereinstimmt.

Der elektrische Widerstand des Kaltleiters nimmt vorzugsweise linear oder zumindest im Wesentlichen linear, also näherungsweise linear, mit der Realtemperatur zu. Der elektrische Widerstand des Heißleiters nimmt vorzugsweise mit zunehmender Realtemperatur nicht linear ab. Der elektrische Widerstand des Heißleiters nimmt vorzugsweise zumindest ab 20 °C mit zunehmender Realtemperatur zunächst steil ab. Zu höheren Realtemperaturen hin nimmt der elektrische Widerstand des Heißleiters nur noch wenig ab und mündet also in einen flachen Verlauf ein. Insgesamt ist der Verlauf des elektrischen Widerstands in Abhängigkeit von der Realtemperatur dann bogenförmig. Der elektrische Widerstand des Heißleiters sinkt also beispielsweise mit der Realtemperatur gemäß einem exponentiellen Verlauf oder zumindest näherungsweise gemäß einem exponentiellen Verlauf. Es wird so erreicht, dass die beiden Widerstände sich sehr gegensätzlich in Abhängigkeit von der Realtemperatur verhalten. Dies kann die Zuverlässigkeit verbessern, da die Schutzeinrichtung selbst im Fall eines beschädigten Temperatursensors oder beschädigten Thermistors zuverlässig abschaltet. Dies gilt dann sogar für den Fall, dass der Thermistor mithilfe des Temperatursensors kalibriert worden ist.

Das Speisenzubereitungsgerät kann eine Kalibriereinrichtung umfassen, die so eingerichtet ist, dass der Thermistor der Heizeinrichtung kalibriert werden kann. Diese Ausgestaltung der Erfindung ist vor allem dann zweckmäßig, wenn das Küchengerät ein Basisteil umfasst, in welches ein Speisenzubereitungsgefäß mit dem darin integrierten Thermistor eingesetzt werden kann. Da in diesem Fall ein Speisenzubereitungsgefäß jederzeit ausgetauscht werden kann, ist es sinnvoll, den jeweiligen Thermistor zum Beispiel dann zu kalibrieren, sobald ein Speisenzubereitungsgefäß in das Basisteil eingesetzt wird und / oder das Speisenzubereitungsgerät eingeschaltet wird. Letzteres setzt grundsätzlich voraus, dass das Speisenzubereitungsgefäß in das Basisteil eingesetzt ist. Durch das Kalibrieren wird ermittelt, bei welchem elektrischen Widerstand des Thermistors welche Realtemperatur herrscht. Für das Kalibrieren kann genügen, dass eine Temperatur des Thermistors ermittelt wird und der Widerstand, den der Thermistor bei dieser ermittelten Temperatur aufweist.

Die Kalibriereinrichtung kann so eingerichtet sein, dass die Kalibriereinrichtung mithilfe des Temperatursensors den Thermistor kalibriert. Es wird also für ein Kalibrieren der elektrische Widerstand des Thermistors gemessen und eine zugehörige Temperatur mithilfe des Temperatursensors ermittelt. Die ermittelte Temperatur entspricht im störungsfreien Zustand der Realtemperatur des Thermistors. Es ist aber auch möglich, für die Kalibrierung einen anderen Temperatursensor zu verwenden.

Die Erfindung betrifft insbesondere ein zuvor beschriebenes Speisenzubereitungsgerät, also ein Speisenzubereitungsgerät mit einem Basisteil und einem Speisenzubereitungsgefäß, das beispielsweise in eine Ausnehmung des Basisteils eingesetzt werden kann. Es kann durch das Einsetzen eine elektrische Verbindung zwischen dem Basisteil und dem Speisenzubereitungsgefäß hergestellt worden sein. Eine darüberhinausgehende mechanische Befestigung zwischen dem Basisteil und dem Speisenzubereitungsgefäß gibt es dann grundsätzlich nicht. Es ist aber möglich, dass auf das Speisenzubereitungsgefäß ein Deckelteil aufgesetzt werden kann, das Deckelteil dann verriegelt werden kann und es dann eine darüberhinausgehende mechanische Befestigung zwischen dem Basisteil und dem Speisenzubereitungsgefäß gibt.

Es kann eine Steuerungseinheit in dem Basisteil vorhanden sein, über die die Stromzufuhr zu dem in dem Speisenzubereitungsgefäß integrierten Thermistor und damit das Erhitzen gesteuert werden kann. Die Stromzufuhr kann über die genannte elektrische Verbindung erfolgen. Der Temperatursensor kann ebenfalls in das Speisezubereitungsgefäß integriert sein. Die Steuerungseinheit kann bei dieser Ausgestaltung das Erhitzen des Thermistors und damit das Erhitzen des Speisenzubereitungsgefäßes in Abhängigkeit von der Temperatur steuern, die durch den Temperatursensor ermittelt wird. Die elektrische Verbindung kann einerseits elektrische Leiter für die Stromzufuhr zum Thermistor umfassen und andererseits elektrische Leiter für das Auslesen des Temperatursensors.

Im Speisenzubereitungsgefäß kann eine Information gespeichert sein, durch die ein Widerstand des Thermistors in eine ermittelte Temperatur umgerechnet werden kann. Als Information kann beispielsweise eine Kurve gespeichert sein, die den elektrischen Widerstand des Thermistors in Abhängigkeit von ermittelten Temperaturen angibt. Es kann aber auch genügen, dass ein elektrischer Widerstand und eine zugehörige ermittelte Temperatur angegeben sind.

Das Speisenzubereitungsgefäß kann beispielsweise einen Barcode, einen RFID-Transponder (Radio-Frequency Identification transponder) oder eine andere Elektronik umfassen, durch die die Information gespeichert werden oder gespeichert sein kann. Das Basisteil ist dann so eingerichtet, dass dieses die Information auslesen kann. Das Basisteil kann beispielsweise einen Barcodeleser oder ein RFID Lesegerät für ein Auslesen der Information umfassen. Im Anschluss daran kann die Steuerungseinheit einen gemessenen Widerstand des Thermistors in eine ermittelte Temperatur umrechnen.

Es besteht damit die Möglichkeit, die Kalibrierung bereits im Rahmen der Fertigung der Heizung oder der Kochgefäße vorzunehmen (z. B. in der Endkontrolle) und die Werte informationstechnisch abrufbar zu speichern. Die Werte können also wie zuvor ausgeführt durch eine Elektronik, RFID Tag, Barcode, etc. abrufbar gespeichert werden. Elektronik, RFID Tag, Barcode, etc. können am oder im Speisenzubereitungsgefäß angeordnet sein.

Das Speisenzubereitungsgerät mit dem Basisteil und dem einsetzbaren Speisenzubereitungsgefäß kann eine Küchenmaschine mit einem Rührwerkzeug sein, mit dem eine Speise in einem Speisenzubereitungsgefäß der Küchenmaschine gerührt und/oder zerkleinert werden kann.

Das Speisenzubereitungsgerät kann einen Topf oder eine Pfanne mit integriertem Thermistor umfassen.

Das Speisenzubereitungsgerät kann mehr als einen Thermistor umfassen. Es können beispielsweise zwei Thermistoren für ein Erhitzen des Kochgefäßes vorhanden sein. Die Thermistoren können in einer Wandung des Speisenzubereitungsgefäßes integriert sein. Die Thermistoren können im oder am Boden des Speisenzubereitungsgefäßes vorhanden sein. Ein erster Thermistor kann sich in einer ersten Hälfte des Bodens befinden. Ein zweiter Thermistor kann sich in einer zweiten Hälfte des Bodens befinden. Ein erster Thermistor kann sich in einer ersten Ebene des Bodens befinden. Ein zweiter Thermistor kann sich in einer zweiten Ebene des Bodens befinden, die oberhalb oder unterhalb der ersten Ebene liegt. Thermistoren können also übereinander angeordnet sein. Ein erster Thermistor kann parallel zu einem zweiten Thermistor verlaufen. Ein erster Thermistor oder ein Abschnitt eines ersten Thermistors können in einem Zwischenraum eines zweiten Thermistors angeordnet sein und/oder umgekehrt. Ein Abschnitt eines ersten Thermistors kann im Boden und ein anderer Abschnitt des ersten Thermistors kann in einer Seitenwand des Kochgefäßes vorhanden sein. Ein Abschnitt eines zweiten Thermistors kann im Boden und ein anderer Abschnitt des zweiten Thermistors kann in einer Seitenwand des Kochgefäßes vorhanden sein.

Die Heizeinrichtung kann also mehr als einen Thermistor umfassen. Sind mehrere Thermistoren vorhanden, so können diese gemeinsam oder getrennt geregelt werden. Sind mehrere Thermistoren vorhanden, so können diese beispielsweise getrennt abgeschaltet werden.

Die Schutzeinrichtung kann so eingerichtet sein, dass diese die Heizleistung der Heizeinrichtung reduziert, indem die Schutzeinrichtung nur einen von mehreren Thermistoren abschaltet.

Ein erster Thermistor kann aus einem ersten Material bestehen und ein zweiter Thermistor kann aus einem zweiten anderen Material bestehen, um die Zuverlässigkeit weiter zu verbessern.

Die Schutzeinrichtung kann so eingerichtet sein, dass diese die Heizeinrichtung abschaltet oder die Heizleistung der Heizeinrichtung zumindest reduziert, wenn durch einen zweiten Thermistor eine Temperatur ermittelt wird, die oberhalb eines dritten vorgegebenen Temperaturschwellwerts liegt, der sich von dem ersten und dem zweiten vorgegebenen Temperaturschwellwert unterscheidet. Die Schutzeinrichtung kann so eingerichtet sein, dass diese einen Mittelwert aus ermittelten Temperaturen bildet, die durch mehrere Thermistoren ermittelt werden. Die Schutzeinrichtung kann so eingerichtet sein, dass diese die Heizeinrichtung abschaltet oder die Heizleistung der Heizeinrichtung zumindest reduziert, wenn der gebildete Mittelwert oberhalb des zweiten vorgegebenen Temperaturschwellwerts liegt. Die zwei oder mehreren Thermistoren können also separat oder kombiniert ausgewertet werden, was zu einer Abschaltung führen kann. Zwei oder mehrere Thermistoren können also Teil der Schutzeinrichtung sein.

Jedem Thermistor kann ein Temperatursensor zugeordnet sein. Es können dann also mehrere Temperatursensoren Teil der Schutzeinrichtung sein. Eine fehlerhafte Temperaturermittlung durch einen der Thermistoren oder durch einen der Temperatursensoren kann dann zur Folge haben, dass nur ein Thermistor abgeschaltet wird und zwar der Thermistor mit dem zugeordneten Temperatursensor, bei denen die Störung festgestellt worden ist. Es können aber auch beide Thermistoren abgeschaltet werden, auch wenn eine Störung nur einen Thermistor nebst zugeordnetem Temperatursensor betrifft. Es kann aber auch zuerst nur der von der Störung betroffene Thermistor abgeschaltet werden und zeitlich verzögert der andere Thermistor. Ein zeitlich verzögertes Abschalten kann sinnvoll sein, um einen Speisenzubereitungsschritt noch ordnungsgemäß beenden zu können.

Die Schutzeinrichtung kann so eingerichtet sein, dass diese die Heizeinrichtung abschaltet oder die Heizleistung der Heizeinrichtung zumindest reduziert, wenn durch einen zweiten Temperatursensor eine Temperatur ermittelt wird, die oberhalb eines vierten vorgegebenen Temperaturschwellwerts liegt. Der vierte vorgegebene Temperaturschwellwert unterscheidet sich dann von den anderen vorgegebenen Temperaturschwellwerten.

Die Schutzeinrichtung kann so eingerichtet sein, dass diese einen Mittelwert aus ermittelten Temperaturen bildet, die durch mehrere Temperatursensoren ermittelt werden. Die Schutzeinrichtung kann so eingerichtet sein, dass diese die Heizeinrichtung abschaltet oder die Heizleistung der Heizeinrichtung zumindest reduziert, wenn der gebildete Mittelwert oberhalb des ersten vorgegebenen Temperaturschwellwerts liegt. Die zwei oder mehreren Temperatursensoren können also separat oder kombiniert ausgewertet werden, was zu einer Abschaltung führen kann.

Die Schutzeinrichtung kann so eingerichtet sein, dass diese die Heizeinrichtung auch dann abschaltet oder die Heizleistung der Heizeinrichtung zumindest auch dann reduziert, wenn die Temperaturdifferenz zwischen der ermittelten Temperatur, die durch einen zweiten Temperatursensor ermittelt wird, und der ermittelten Temperatur, die durch einen zweiten Thermistor ermittelt wird, kleiner als eine vorgegebene Temperaturdifferenz ist.

Sind zwei Thermistoren vorhanden, so kann zwischen den beiden Thermistoren nur ein Temperatursensor positioniert sein. Es kann dann also nur einen Temperatursensor geben, der beiden Thermistoren zugeordnet ist und somit einen Temperaturwert für beide Thermistoren liefert. Die Schutzeinrichtung kann dann so eingerichtet sein, dass diese die Heizeinrichtung abschaltet oder die Heizleistung der Heizeinrichtung zumindest reduziert, wenn die Temperaturdifferenz zwischen der ermittelten Temperatur, die durch den einen Temperatursensor ermittelt wird, und der ermittelten Temperatur, die durch den ersten oder den zweiten Thermistor ermittelt wird, kleiner als eine vorgegebene Temperaturdifferenz ist.

Durch die Erfindung lassen sich bei einem Küchengerät übermäßig hohe Temperaturen sehr zuverlässig vermeiden, ohne dafür ausschließlich aus Sicherheitsgründen vorhandene Bauteile wie Schmelzsicherung oder Bimetallschalter vorsehen zu müssen.

Umfasst der Temperatursensor beispielsweise einen Heißleiter und damit einen NTC Widerstand (Negative Temperature Coefficient Thermistor), so kann der Temperatursensor aufgrund eines Kurzschlusses des NTC Widerstands gestört sein. Der Widerstand beträgt dann fast 0 Ω. Ein Widerstand von fast 0 Ω wird als sehr hohe ermittelte Temperatur interpretiert. Die Schutzeinrichtung schaltet dann die Heizeinrichtung vorzugsweise vollständig ab.

Der Schaltkreis des NTC Widerstands kann gestört und deshalb offen sein. Der elektrische Widerstand kann so gegen unendlich gehen. Ein sehr hoher Widerstand wird als eine sehr niedrige ermittelte Temperatur interpretiert. Die Differenz zwischen der ermittelten Temperatur, die durch den Thermistor ermittelt wird, und der ermittelten Temperatur, die durch den Temperatursensor ermittelt wird, wird dann sehr groß. Die Schutzeinrichtung schaltet dann die Heizeinrichtung vorzugsweise vollständig ab.

Kontakte des Temperatursensors sowie des NTC Widerstands können verschmutzen, so zum Beispiel durch Lebensmittel. Es kann dadurch ein zusätzlicher parallel geschalteter Widerstand entstehen. Es wird dann ein zu geringer elektrischer Widerstand gemessen. Verschmutzungen können aber auch zu einem zusätzlichen in Serie geschalteten Widerstand führen. Es wird dann ein zu großer elektrischer Widerstand gemessen. Auch eine Störung des Temperatursensors aufgrund Verschmutzung kann erkannt werden, weil die Temperaturdifferenz zwischen der ermittelten Temperatur, die durch den Thermistor ermittelt wird, und der ermittelten Temperatur, die durch den Temperatursensor ermittelt wird, zu groß werden wird. Die Schutzeinrichtung schaltet dann die Heizeinrichtung vorzugsweise vollständig ab.

Es zeigen:
- Figur 1:: Boden eines Speisenzubereitungsgeräts;
- Figur 2:: Küchenmaschine;
- Figur 3:: ermittelter Temperaturverlauf im Fall eines ungestörten Zustands;
- Figur 4:: ermittelter Temperaturverlauf im Fall eines stark gestörten Zustands;
- Figur 5:: ermittelter Temperaturverlauf im Fall eines leicht gestörten Zustands;
- Figur 6:: ermittelter Temperaturverlauf im Fall eines gestörten Zustands;
- Figur 7:: ermittelter Temperaturverlauf im Fall eines ungestörten Zustands mit Kalibrierung bei hoher Realemperatur;
- Figur 8:: ermittelter Temperaturverlauf im Fall eines stark gestörten Zustands mit Kalibrierung bei hoher Realtemperatur;
- Figur 9:: ermittelter Temperaturverlauf im Fall eines leicht gestörten Zustands mit Kalibrierung bei hoher Realtemperatur;
- Figur 10:: ermittelter Temperaturverlauf im Fall eines gestörten Zustands mit Kalibrierung bei hoher Realtemperatur;
- Figur 11:: Ablaufdiagramm.

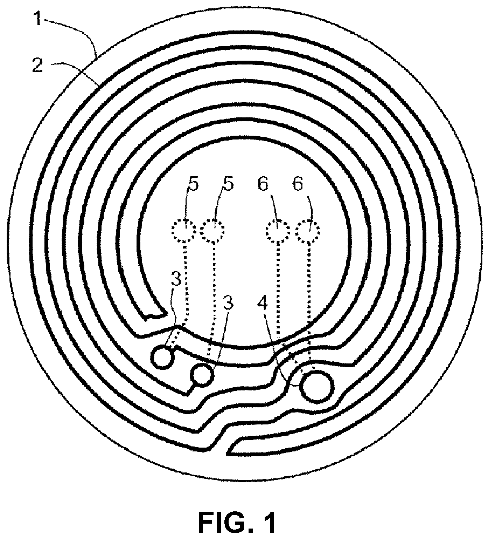

Die Figur 1 zeigt einen Boden 1 eines Speisenzubereitungsgerät. In den Boden 1 ist ein Thermistor 2 integriert. Der Thermistor 2 wird durch eine elektrische Leiterbahn gebildet, die beispielsweise aus Kupfer, Aluminium oder einer geeigneten Legierung besteht. Die elektrische Leiterbahn verläuft derart von einem ersten elektrischen Anschluss 3 zu einem zweiten elektrischen Anschluss 3, dass eine ringförmige Fläche des Bodens 1 möglichst gleichmäßig erhitzt werden kann.

Der Boden 1 kann beispielsweise zumindest im Wesentlichen aus Metall bestehen. Innerhalb des Metalls befindet sich dann der Thermistor 2. Der Thermistor ist gegenüber dem Metall des Bodens 1 elektrisch isoliert.

Es gibt einen in den Boden 1 integrierten Temperatursensor 4. Der Temperatursensor 4 ist zwischen elektrischen Leiterbahnabschnitten des Thermistors 2 angeordnet.

Vom Boden 1 können elektrische Steckverbinder 5, 6 beispielsweise nach unten abstehen. Die beiden elektrischen Steckverbinder 5 sind mit den elektrischen Anschlüssen 3 des Thermistors elektrisch verbunden. Über die elektrischen Steckverbinder 5 kann dann elektrischer Strom fließen, um so den Thermistor zu erhitzen. Aus der angelegten elektrischen Spannung und der Stromstärke des fließenden elektrischen Stroms kann dann der elektrische Widerstand des Thermistors 2 berechnet werden. Der elektrische Widerstand kann in eine ermittelte Temperatur umgerechnet werden. Mithilfe des Thermistors 2 kann also eine Temperatur ermittelt werden.

Die elektrischen Steckverbinder 6 sind mit dem Temperatursensor 4 verbunden. Umfasst der Temperatursensor 4 einen temperaturabhängigen elektrischen Leiter oder Halbleiter, so kann über die elektrischen Steckverbinder 6 der elektrische Widerstand des Temperatursensors 4 ermittelt werden. Der ermittelte elektrische Widerstand des Temperatursensors 4 ist im ungestörten Zustand ein Maß für die Realtemperatur und kann daher in eine ermittelte Temperatur umgerechnet werden.

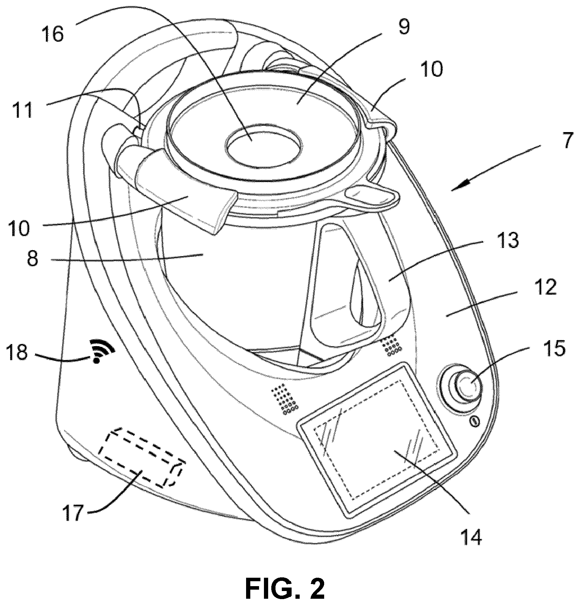

Der Boden 1 kann ein Boden eines Speisenzubereitungsgefäßes einer Küchenmaschine sein. Die Figur 2 zeigt ein Beispiel für eine Küchenmaschine 7 mit einem solchen Speisenzubereitungsgefäß 8. Auf dem Speisenzubereitungsgefäß 8 kann ein Deckelteil 9 aufgesetzt sein. Das Deckelteil 9 für das Speisenzubereitungsgefäß 8 kann durch armartige Verriegelungselemente, also Arme 10, verriegelt werden. Das Deckelteil 9 kann sich dann zwischen den beiden Armen 10 befinden. Die Arme 10 können um ihre Längsachse motorisiert gedreht werden und so hin und her zwischen einer Öffnungsstellung und einer Verriegelungsstellung. Das Deckelteil 9 kann einen Sensor haben und zwar einen Kipphebel 11 eines elektrischen Schalters, der durch das Deckelteil 9 heruntergedrückt und so ausgelöst werden kann. Es kann so das ordnungsgemäße Verriegeln detektiert werden. Die armartigen Verriegelungselemente 10 und der Kipphebel 11 können an einem Basisteil 12 der Küchenmaschine 7 angebracht sein. Das Speisenzubereitungsgefäß 8 ist beispielsweise in das Basisteil 12 eingesetzt und kann aus dem Basisteil 12 herausgenommen werden. Um das Speisenzubereitungsgefäß 8 herausnehmen zu können, kann dieses einen Griff 13 umfassen. Das Basisteil 12 kann zur Bedienung ein berührungsempfindliches Display 14 und/oder einen Drehschalter 15 umfassen. Der Drehschalter 15 kann beispielsweise gedreht und gedrückt werden. Touch-Display 14 und Drehschalter 15 können also Bedienelemente der Küchenmaschine 7 sein. Das Deckelteil 9 kann mittig eine Öffnung 16 umfassen, die beispielsweise mit einem gefäßartigen Verschluss verschlossen werden kann.

Im Basisteil 12 kann sich eine Steuerungseinheit 17 befinden. Über die Bedienelemente 14 und 15 können Daten in die Steuerungseinheit 17 eingegeben werden. Im Basisteil 12 kann sich eine Funkeinheit 18 befinden, über die drahtlos Daten gesendet und/oder empfangen werden können. Über die Funkeinheit 18 kann die Steuerungseinheit 17 beispielsweise auf ein extern gespeichertes Rezept zugreifen. Im Anschluss daran kann die Steuerungseinheit 17 mithilfe des Rezepts die Zubereitung einer Speise steuern. Ein solches Rezept kann aber auch intern gespeichert sein.

Im Speisenzubereitungsgefäß 8 kann sich ein Schneidwerkzeug befinden, das mit einem Motor angetrieben werden kann. Der Motor kann sich im Basisteil 12 befinden. Es gibt dann eine Durchführung im Boden des Speisenzubereitungsgefäß 8, durch die hindurch der Motor mit dem Schneidwerkzeug drehfest miteinander verbunden werden kann. Der Thermistor 2 kann dann um die Durchführung herum angeordnet sein. Der Thermistor 2 im Grund des Speisenzubereitungsgefäßes 8 kann über Steckverbinder 5 mit dem Basisteil 12 für ein Erhitzen stromleitend verbunden werden. Das Erhitzen kann über die Steuerungseinheit 17 gesteuert werden. Außerdem kann mithilfe der Steuerungseinheit 17 eine Temperatur des Thermistors 2 ermittelt werden. Der Temperatursensor 4 kann über Steckverbinder 6 mit dem Basisteil 12 für eine Temperaturermittlung stromleitend verbunden werden. Mithilfe der Steuerungseinheit 17 kann eine Temperatur des Temperatursensors 4 ermittelt werden.

Um mit dem Thermistor 2 Temperaturen ermittelten zu können, muss dieser zuvor kalibriert werden. Das Kalibrieren des Thermistors kann mithilfe des Temperatursensors 4 wiederkehrend durchgeführt werden. Das Kalibrieren erfolgt beispielsweise automatisiert immer dann, wenn das Speisenzubereitungsgefäß 8 in das Basisteil 12 der Küchenmaschine 7 eingesetzt worden ist. Das Kalibrieren erfolgt beispielsweise automatisiert immer dann, wenn die Küchenmaschine eingeschaltet wird. Dies setzt voraus, dass das Speisenzubereitungsgefäß 8 bereits in das Basisteil 12 eingesetzt ist. Um den Thermistor zu kalibrieren, wird beispielsweise bei einer durch den Temperatursensors 4 ermittelten Anfangstemperatur To der Anfangswiderstand Ro des Thermistors 2 ermittelt. Aus diesen Anfangswerten kann dann mithilfe der Gleichung R(T_{PTC}) = Ro . (1 + TCR · (T_{PTC} - To)) eine Temperatur T_{PTC} mithilfe des Thermistors ermittelt werden, wobei R(T_{PTC}) der temperaturabhängige Widerstand des Thermistors 2 und TCR der Widerstandssteigungswert des Thermistors 2 ist. Wurde also der Thermistor 2 kalibriert und wird im Anschluss daran ein Widerstand R des Thermistors 2 ermittelt, dann kann die Steuerungseinheit 17 eine zugehörige ermittelte Temperatur T_{PTC} berechnen.

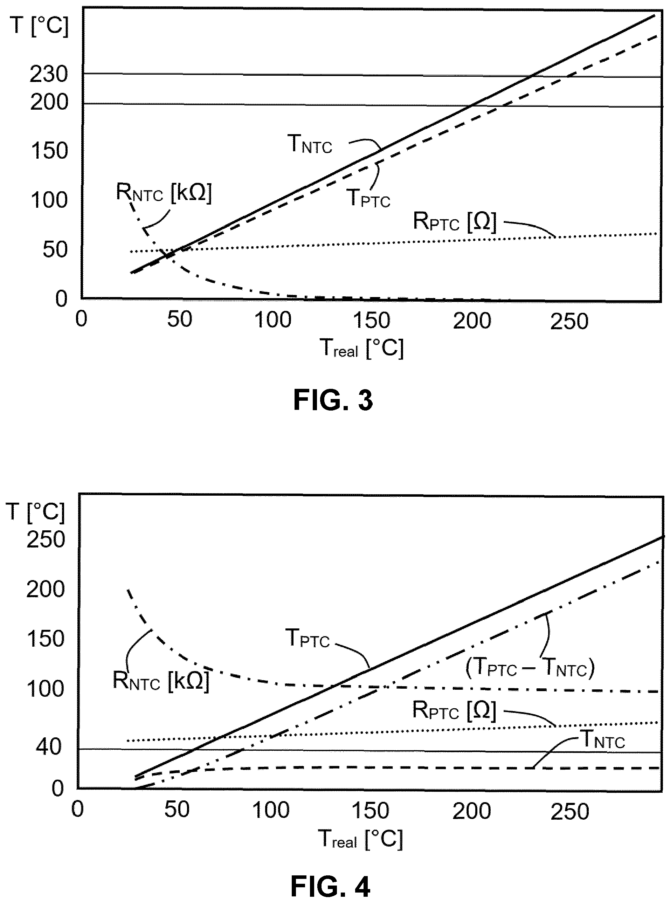

Ein Temperatursensor 4, der wiederkehrend auch zur Kalibrierung genutzt werden soll, kann allerdings beispielsweise durch Verschmutzungen gestört und damit beschädigt werden. Vor diesem Hintergrund beziehen sich die nachfolgenden Figuren 3 bis 10 u. a. auf Störungen und damit verbundene Beschädigungen des Temperatursensors 4 für den Fall, dass der Temperatursensor einen Heißleiter umfasst, dessen elektrischer Widerstand mit steigenden Temperaturen abfällt und zwar gemäß einem exponentiellen oder zumindest näherungsweise exponentiellen Verlauf.

Der Thermistor 2 ist ein Kaltleiter, also ein PTC Widerstand, dessen Widerstand mit steigender Realtemperatur linear oder zumindest näherungsweise linear zunimmt. Es kann auch genügen, dass es einen relevanten Temperaturbereich gibt und innerhalb des Temperaturbereichs der Widerstand mit steigender Temperatur linear oder zumindest näherungsweise linear zunimmt. Der relevante Temperaturbereich entspricht dem Temperaturbereich, den das Speisenzubereitungsgerät für das Zubereiten einer Speise abdecken kann.

Die Figur 3 bezieht sich auf einen ungestörten Zustand. In der Figur 3 sind durch den Thermistor 2 und den Temperatursensor 4 ermittelte Temperaturen gegen die herrschende Realtemperatur Tᵣₑₐₗ aufgetragen. T_{NTC} zeigt die durch den Temperatursensor 4 ermittelte Temperatur. T_{PTC} zeigt die durch den Thermistor 2 ermittelte Temperatur.

Die ermittelten Temperaturen T_{PTC} sowie T_{NTC} entsprechen der Realtemperatur Tᵣₑₐₗ. Thermistor 2 und Temperatursensor 4 arbeiten daher störungsfrei und ordnungsgemäß.

In der Figur 3 ist außerdem der Verlauf der Widerstände in Abhängigkeit von der Realtemperatur Tᵣₑₐₗ dargestellt. R_{PTC} zeigt den temperaturabhängigen Verlauf des Widerstands des Thermistors 2. Dieser nimmt mit der Realtemperatur zu. Es handelt sich also um einen Kaltleiter. R_{NTC} zeigt den temperaturabhängigen Verlauf des Widerstands des Temperatursensors 4. Dieser nimmt mit der Realtemperatur ab. Es handelt sich um einen Heißleiter und damit um einen NTC Widerstand.

Der ermittelte Temperaturunterschied T_{PTC} - T_{NTC} bleibt immer unterhalb eines vorgegebenen Werts von zum Beispiel 40 °C bzw. 40 K. Die Steuerungseinheit 17 schaltet die Heizeinrichtung 2 daher nur dann ab, wenn mithilfe des Thermistors 2 eine Temperatur T_{PTC} von zum Beispiel mehr als 230 °C ermittelt wird oder wenn mithilfe des Temperatursensors 4 eine Temperatur T_{NTC} von zum Beispiel mehr als 200 °C ermittelt wird. Die Schutzeinrichtung wird also durch die Steuerungseinheit 17 realisiert.

Der Thermistor 2 kann bei einer Realtemperatur, wie diese in Wohnräumen herrscht, durch den Temperatursensor 4 ordnungsgemäß kalibriert werden, so zum Beispiel bei einer herrschenden Realtemperatur Tᵣₑₐₗ von 25 °C.

Die Figur 4 zeigt den Fall, dass der Temperatursensor 4 stark gestört und somit stark beschädigt ist. Sein Widerstand R_{NTC} ist sehr viel höher im Vergleich zu dem Widerstand R_{NTC}, der in der Figur 3 gezeigt wird. Der Widerstand R_{NTC} ist beispielsweise aufgrund der Störung bei jeder Realtemperatur um 100 kΩ zu hoch. Es werden daher immer nur ermittelte Temperaturen von weniger als 30°C durch den Temperatursensor 4 unabhängig von der Realtemperatur Tᵣₑₐₗ ermittelt. Steigt die Realtemperatur Tᵣₑₐₗ an, so nimmt deshalb die Temperaturdifferenz T_{PTC} - T_{NTC} zu, so zum Beispiel im Wesentlichen linear. Überschreitet die Temperaturdifferenz T_{PTC} - T_{NTC} beispielsweise einen voreingestellten Wert von 40 °C bzw. 40 K, so schaltet die Schutzeinrichtung 17 die Heizeinrichtung 2 beispielsweise vollständig ab.

Der Thermistor 2 kann bei einer Realtemperatur, wie diese in Wohnräumen herrscht, durch den Temperatursensor 4 dennoch hinreichend ordnungsgemäß kalibriert werden, so zum Beispiel bei einer herrschenden Realtemperatur Tᵣₑₐₗ von 25 °C. Eine Kalibrierung durch einen stark gestörten Temperatursensor 4 bei üblichen realen Raumtemperaturen hat also nicht zur Folge, dass die Schutzeinrichtung 17 unwirksam wird.

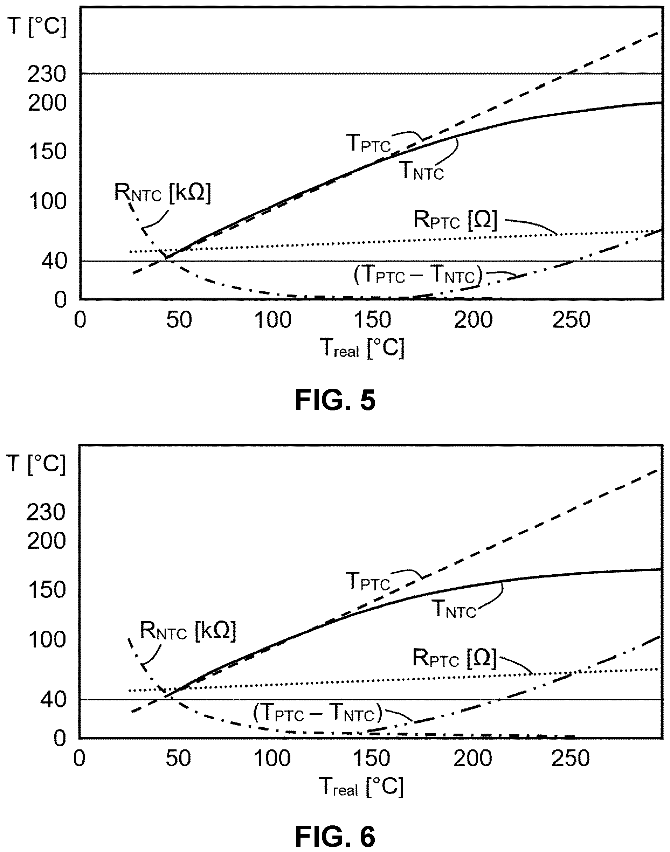

Die Figur 5 zeigt den Fall, dass der Temperatursensor 4 geringfügig beschädigt ist. Sein Widerstand R_{NTC} ist geringfügig höher im Vergleich zu dem Widerstand R_{NTC}, der in der Figur 3 gezeigt wird. Der Widerstand R_{NTC} ist beispielsweise aufgrund der Störung um 0,485 kΩ zu hoch. Zunächst werden durch den Temperatursensor 4 daher Temperaturen ermittelt, die der Realtemperatur Tᵣₑₐₗ entsprechen. Werden Realtemperaturen Tᵣₑₐₗ von beispielsweise mehr als 150 °C erreicht, so macht sich die geringfüge Beschädigung bemerkbar. Es werden nämlich zu geringe Temperaturen durch den Temperatursensor 4 ermittelt. Die Abweichung von der Realtemperatur nimmt mit steigender Realtemperatur Tᵣₑₐₗ immer stärker zu. Die Temperaturdifferenz T_{PTC} - T_{NTC} nimmt dann zu. Überschreitet die Temperaturdifferenz T_{PTC} - T_{NTC} beispielsweise einen voreingestellten Wert von 40°C bzw. 40 K, so schaltet die Schutzeinrichtung 17 die Heizeinrichtung 2 bevorzugt vollständig ab. Die Temperaturdifferenz T_{PTC} - T_{NTC} von 40°C wird beispielsweise erreicht, wenn durch den Thermistor 2 eine Realtemperatur von etwa 230°C erreicht wird. Eine Abschaltung der Heizeinrichtung kann daher in solchen Fällen auch deshalb erfolgen, weil durch den Thermistor 2 eine zu hohe Temperatur ermittelt wurde. Im Fall einer geringfügigen Störung, wie diese in der Figur 5 dargestellt wird, kann eine Abschaltung der Heizeinrichtung also aus zwei verschiedenen Gründen erfolgen.

Der Thermistor 2 kann bei einer realen Raumtemperatur, wie diese in Wohnräumen herrscht, durch den Temperatursensor ordnungsgemäß kalibriert werden, so zum Beispiel bei einer herrschenden Realtemperatur Tᵣₑₐₗ von 25 °C. Eine Kalibrierung durch einen leicht gestörten Temperatursensor 4 bei üblichen realen Raumtemperaturen hat also nicht zur Folge, dass die Schutzeinrichtung 17 unwirksam wird.

Die Figur 6 zeigt den Fall, dass der Temperatursensor 4 im Vergleich zu dem in der Figur 5 gezeigten Fall etwas stärker beschädigt ist. Sein Widerstand R_{NTC} ist etwas höher im Vergleich zu dem Widerstand R_{NTC}, der in der Figur 5 gezeigt wird. Der Widerstand R_{NTC} ist beispielsweise aufgrund der Störung bzw. Beschädigung um 1 kΩ zu hoch im Vergleich zum nicht beschädigten Zustand. Zunächst werden durch den Temperatursensor 4 wie im Fall der Figur 5 Temperaturen ermittelt, die der Realtemperatur Tᵣₑₐₗ entsprechen. Eine Abweichung tritt allerdings früher auf im Vergleich zu dem in der Figur 5 gezeigten Fall. Werden Realtemperaturen Tᵣₑₐₗ von beispielsweise mehr als 120 °C erreicht, so macht sich die Beschädigung bemerkbar. Es werden zu geringe Temperaturen durch den Temperatursensor 4 ermittelt. Die Abweichung von der Realtemperatur Tᵣₑₐₗ nimmt mit zunehmenden Realtemperaturen Tᵣₑₐₗ wie im Fall der Figur 5 immer stärker zu. Die Temperaturdifferenz T_{PTC} - T_{NTC} nimmt dann zu. Überschreitet die Temperaturdifferenz T_{PTC} - T_{NTC} beispielsweise einen voreingestellten Wert von 40°C bzw. 40 K, so schaltet die Schutzeinrichtung 17 die Heizeinrichtung 2 bevorzugt vollständig ab. Die Temperaturdifferenz T_{PTC} - T_{NTC} von 40°C wird deutlich früher erreicht, bevor durch den Thermistor 2 eine Realtemperatur von etwa 230°C erreicht wird. Eine Abschaltung der Stromzufuhr zum Thermistor 2 kann daher in solchen Fällen nicht deshalb erfolgen, weil durch den Thermistor 2 eine zu hohe Temperatur ermittelt wurde.

Der Thermistor 2 kann bei einer Realtemperatur, wie diese in Wohnräumen herrscht, durch den Temperatursensor ordnungsgemäß kalibriert werden, so zum Beispiel bei einer herrschenden Realtemperatur Tᵣₑₐₗ von 25 °C. Eine Kalibrierung durch den gestörten Temperatursensor 4 bei üblichen realen Raumtemperaturen hat also erneut nicht zur Folge, dass die Schutzeinrichtung 17 unwirksam wird.

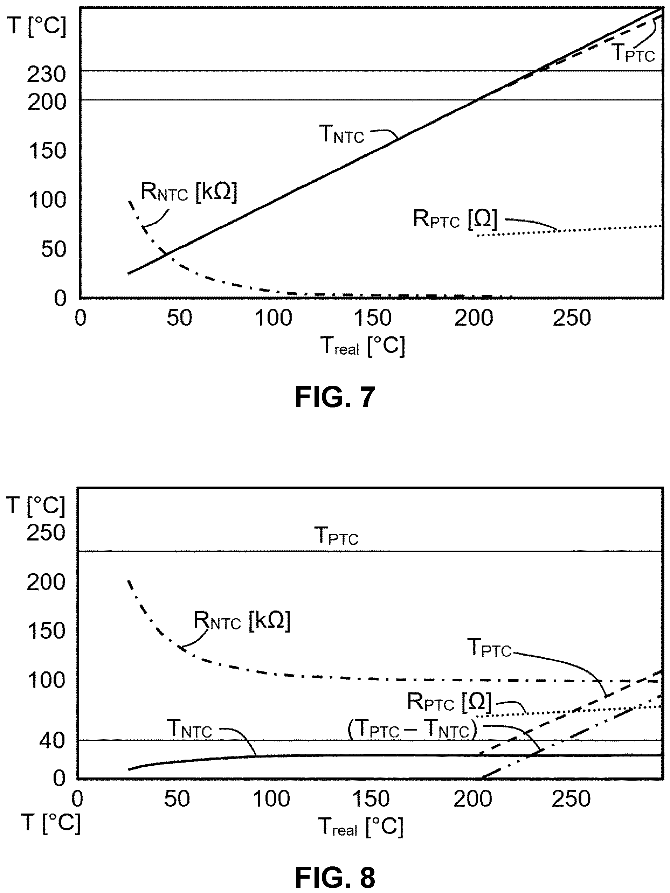

Die Figur 7 bezieht sich auf einen ungestörten Zustand. Eine Kalibrierung des Thermistors 2 mithilfe des Temperatursensors 4 findet bei hohen Realtemperaturen, beispielsweise bei 200 °C, statt. Die ermittelte Temperatur T_{PTC} sowie der zugehörige Widerstand R_{PTC} werden daher ab Temperaturen von 200 °C dargestellt. Eine Abschaltung der Heizeinrichtung und damit eine Stromzufuhr zum Thermistor 2 können erfolgen, sobald durch den Temperatursensor 4 oder durch den Thermistor 2 zu hohe Temperaturen von mehr als 200 °C bzw. 230 °C ermittelt werden. Eine ordnungsgemäße Kalibrierung des Thermistors 2 ist bei einer herrschenden Realtemperatur Tᵣₑₐₗ von beispielsweise 200 °C möglich.

Die Figur 8 zeigt den Fall, dass der Temperatursensor 4 stark beschädigt ist und sein Widerstand R_{NTC} deshalb um 100 kΩ zu hoch ist. Durch den Temperatursensor 4 werden daher nur Temperaturen ermittelt, die deutlich unterhalb von 50 °C liegen. Liegt die Realtemperatur Tᵣₑₐₗ beispielsweise bei 200 °C und wird dann der Thermistor 2 kalibriert, so werden mithilfe des Thermistors 2 im Anschluss an die Kalibrierung Temperaturen T_{PTC} ermittelt, die erheblich unterhalb der Realtemperatur Tᵣₑₐₗ liegen. Es ist also nicht mehr möglich, eine Temperatur T_{NTC} oder T_{PTC} zu ermitteln, die der herrschenden Realtemperatur Tᵣₑₐₗ entspricht. Trotz der fehlerhaften Kalibrierung schaltet die Schutzeinrichtung 17 die Stromzufuhr zum Thermistor 2 ab, sobald eine übermäßig hohe Realtemperatur Tᵣₑₐₗ erreicht wird, weil die Differenz T_{PTC} - T_{NTC} dann den Wert von 40 °C übersteigt. Selbst eine schwerwiegende Beschädigung des Temperatursensors 4 und eine damit verbundene sehr fehlerhafte Kalibrierung des Thermistors 2 hat also nicht zur Konsequenz, dass die Schutzeinrichtung 17 außer Kraft gesetzt wird.

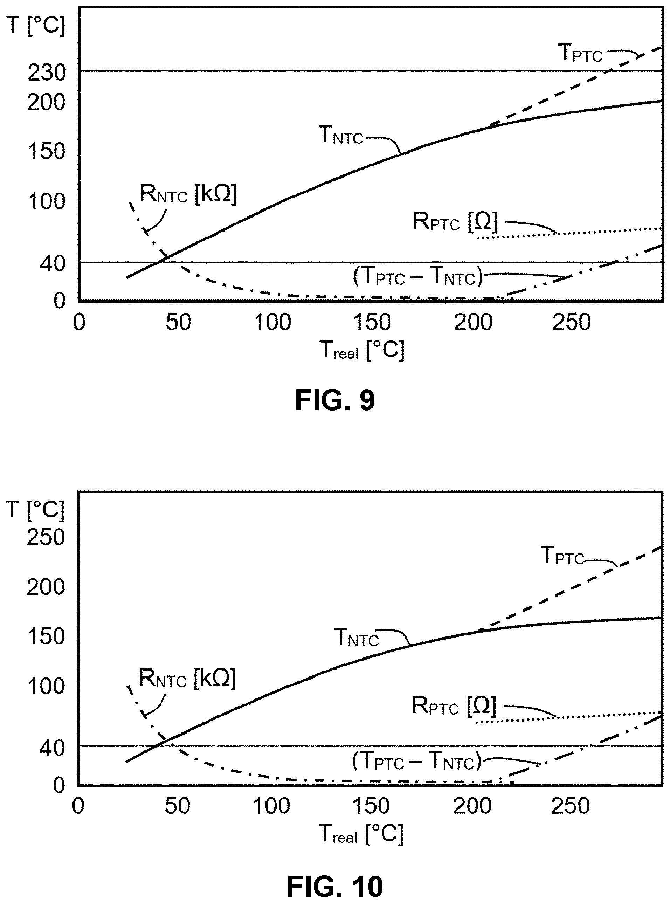

Die Figur 9 zeigt den Fall, dass der Temperatursensor 4 geringfügig beschädigt ist. Sein Widerstand R_{NTC} ist geringfügig höher im Vergleich zu dem Widerstand R_{NTC}, der in der Figur 3 gezeigt wird. Der Widerstand R_{NTC} ist beispielsweise aufgrund der Störung immer um 0,485 kΩ zu hoch. Der Thermistor 2 wird bei einer herrschenden Realtemperatur Tᵣₑₐₗ von beispielsweise 200 °C kalibriert. Dies hat zur Folge, dass bei hohen Realtemperaturen beispielsweise ab 200 °C immer nur zu niedrige Temperaturen T_{PTC} sowie T_{NTC} ermittelt werden. Eine Ermittlung der Temperatur mithilfe des Thermistors 2 als auch mithilfe des Temperatursensors 4 führt bei hohen Realtemperaturen zu Werten, die um mehrere 10 °C zu niedrig sind. Dennoch ist die Schutzeinrichtung 17 in der Lage, die Zufuhr von Strom zum Thermistor 2 abzuschalten, bevor eine Realtemperatur Tᵣₑₐₗ von beispielsweise 295 °C erreicht wird. Denn entweder schaltet die Schutzeinrichtung 17 ab, sobald durch den Thermistor 2 eine Temperatur T_{PTC} von mehr als 230 °C ermittelt wird, oder die Schutzeinrichtung 17 schaltet ab, weil die Temperaturdifferenz T_{PTC} - T_{NTC} den Wert 40°C übersteigt. Eine Temperaturdifferenz T_{PTC} - T_{NTC} von mehr als 40 °C wird erreicht, wenn die Realtemperatur zwischen 260 °C und 280 °C liegt. Es wird also auch bei einer geringfügigen Beschädigung des Temperatursensors 4 erreicht, dass eine Realtemperatur nahe 300 °C wie zum Beispiel 295 °C nicht erreicht werden kann.

Die Figur 10 bezieht sich auf eine solche Störung bzw. Beschädigung des Temperatursensors 4, dass sein Widerstand um 1 kΩ zu hoch ist im Vergleich zum ungestörten bzw. nicht beschädigten Zustand. Zwar ist es im Bereich hoher Realtemperaturen nicht möglich, die Realtemperatur Tᵣₑₐₗ zufriedenstellend genau zu ermitteln. Dennoch ist sichergestellt, dass Realtemperaturen von näherungsweise 300 °C nicht erreicht werden können. Die Schutzeinrichtung 17 unterbricht nämlich vorher die Stromzufuhr zum Thermistor 2 aufgrund einer zu großen Temperaturdifferenz T_{PTC} - T_{NTC} von beispielsweise mehr als 40 °C.

Ein bevorzugter Ablauf ist wie folgt.

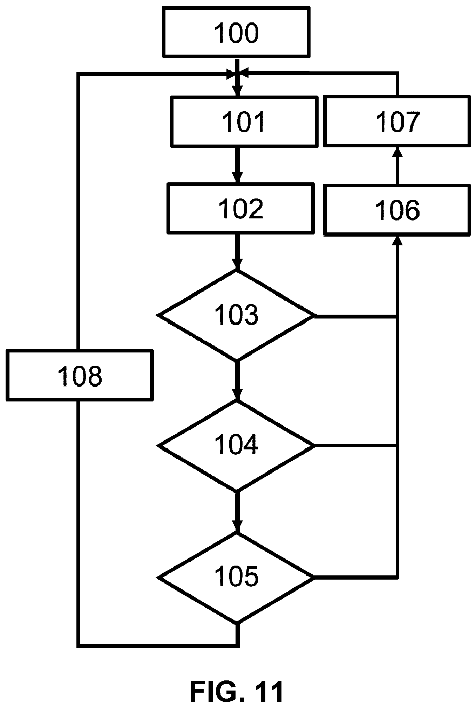

Zunächst wird ein Thermistor 2 kalibriert, also beispielsweise ein als Thermistor dienender PTC-Heizleiter. Die Kalibrierung kann wie beschrieben im Speisenzubereitungsgerät oder in der Produktion erfolgen. Eine solche Kalibrierung wird im Ablaufdiagramm der Figur 11 durch einen Schritt 100 angedeutet.

Bei laufendem Heizbetrieb des Speisenzubereitungsgerät werden Temperaturen beispielsweise durch Auswertung von Widerständen ermittelt. Einerseits wird dann der Widerstand des Thermistors 2 gemäß Schritt 101 ausgewertet, also beispielsweise der Widerstand eines PTC-Heizleiters. Andererseits wird der Widerstand des Temperatursensors 4 gemäß Schritt 102 ausgewertet, also beispielsweise der Widerstand eines NTC-Leiters. Die Widerstandsauswertung kann innerhalb des Speisenzubereitungsgeräts erfolgen.

Während des laufenden Heizbetriebs wird geprüft, ob
- durch den Temperatursensor 4 eine Temperatur gemäß Schritt 103 ermittelt wird, die unterhalb des ersten vorgegebenen Temperaturschwellwerts liegt,
- durch den Thermistor 2 eine Temperatur gemäß Schritt 104 ermittelt wird, die unterhalb des zweiten vorgegebenen Temperaturschwellwerts liegt, und
- die Temperaturdifferenz zwischen der Temperatur, die durch den Temperatursensor 4 ermittelt wird, und der Temperatur, die durch den Thermistor 2 gemäß Schritt 105 ermittelt wird, kleiner als eine vorgegebene Temperaturdifferenz ist.

Ist keines der drei Abschaltkriterien erfüllt, wird das Ablaufdiagramm ab dem Schritt 101 erneut durchlaufen. Der optionale Schritt 108 entfällt in diesem Fall.

Wenn eines der drei Abschalt-Kriterien erfüllt ist, wird die Heizeinrichtung des Speisenzubereitungsgeräts gemäß Schritt 106 ausgeschaltet. Das Speisenzubereitungsgerät kann dann eine Fehlermeldung optisch und/oder akkustich ausgegeben, dass die Heizeinrichtung nicht automatisiert wieder neu gestartet wird.

Bevor die Heizeinrichtung wieder gestartet werden kann, muss der Benutzer beispielsweise erst den Fehler gemäß Schritt 107 quittieren, so zum Beispiel durch Betätigen einer Taste des Speisenzubereitungsgeräts. Im Anschluss daran kann der Heizbetrieb erst dann wieder durch den Benutzer gestartet werden, wenn alle Abschalt-Kriterien nicht erfüllt sind. Erst dann kann die Heizeinrichtung also durch den optionalen Schritt gemäß Schritt 108 wieder eingeschaltet werden.

## Patentansprüche

1. Speisenzubereitungsgerät mit einem Thermistor (2) als Heizeinrichtung für das Erhitzen einer Speise durch das Speisenzubereitungsgerät (7), mit einem Temperatursensor (4) für das Messen einer durch das Erhitzen erzeugten Realtemperatur und einer Schutzeinrichtung (17), die so eingerichtet ist, dass diese die Heizeinrichtung abschaltet oder die Heizleistung der Heizeinrichtung zumindest reduziert, wenn durch den Temperatursensor (4) eine Temperatur ermittelt wird, die oberhalb eines ersten vorgegebenen Temperaturschwellwerts liegt, **dadurch gekennzeichnet, dass** das Speisenzubereitungsgerät (7) so eingerichtet ist, dass auch mit dem Thermistor (2) eine Temperatur ermittelt wird und die Schutzeinrichtung (17) so eingerichtet ist, dass diese die Heizeinrichtung auch in Abhängigkeit von der ermittelten Temperatur abschaltet oder die Heizleistung der Heizeinrichtung in Abhängigkeit von der ermittelten Temperatur zumindest reduziert, die mithilfe des Thermistors (2) ermittelt wird.

2. Speisenzubereitungsgerät nach dem vorhergehenden Anspruch, **dadurch gekennzeichnet, dass** die Schutzeinrichtung (17) so eingerichtet ist, dass diese die Heizeinrichtung abschaltet oder die Heizleistung der Heizeinrichtung zumindest reduziert, wenn durch den Thermistor (2) eine Temperatur ermittelt wird, die oberhalb eines zweiten vorgegebenen Temperaturschwellwerts liegt.

3. Speisenzubereitungsgerät nach dem vorhergehenden Anspruch, **dadurch gekennzeichnet, dass** der erste vorgegebene Temperaturschwellwert kleiner als der zweite vorgegebene Temperaturschwellwert ist.

4. Speisenzubereitungsgerät nach einem der vorhergehenden Ansprüche, **dadurch gekennzeichnet, dass** der erste vorgegebene Temperaturschwellwert zwischen 180°C und 220°C liegt.

5. Speisenzubereitungsgerät nach einem der vorhergehenden Ansprüche, **dadurch gekennzeichnet, dass** der zweite vorgegebene Temperaturschwellwert zwischen 210°C und 250°C liegt.

6. Speisenzubereitungsgerät nach einem der vorhergehenden Ansprüche, **dadurch gekennzeichnet, dass** die Schutzeinrichtung (17) so eingerichtet ist, dass diese die Heizeinrichtung abschaltet oder die Heizleistung der Heizeinrichtung zumindest reduziert, wenn die Temperaturdifferenz zwischen der ermittelten Temperatur, die durch den Temperatursensor (4) ermittelt wird, und der ermittelten Temperatur, die durch den Thermistor (2) ermittelt wird, größer als eine vorgegebene Temperaturdifferenz ist.

7. Speisenzubereitungsgerät nach dem vorhergehenden Anspruch, **dadurch gekennzeichnet, dass** die vorgegebene Temperaturdifferenz zwischen 30°C und 60°C liegt.

8. Speisenzubereitungsgerät nach einem der vorhergehenden abhängigen Ansprüche, **dadurch gekennzeichnet, dass** dieses so eingerichtet ist, dass nach einem Abschalten der Heizeinrichtung durch die Schutzeinrichtung (17) die Heizeinrichtung nur dann wiedereingeschaltet werden kann, wenn
• durch den Temperatursensor (4) eine Temperatur ermittelt wird, die unterhalb des ersten vorgegebenen Temperaturschwellwerts liegt,
• durch den Thermistor (2) eine Temperatur ermittelt wird, die unterhalb des zweiten vorgegebenen Temperaturschwellwerts liegt, und
• die Temperaturdifferenz zwischen der Temperatur, die durch den Temperatursensor (4) ermittelt wird, und der Temperatur, die durch den Thermistor (2) ermittelt wird, kleiner als eine vorgegebene Temperaturdifferenz ist.

9. Speisenzubereitungsgerät nach einem der vorhergehenden Ansprüche, **dadurch gekennzeichnet, dass** das Speisenzubereitungsgerät eine Steuerungseinheit (17) umfasst, die so eingerichtet ist, dass das Erhitzen durch die Heizeinrichtung in Abhängigkeit von der Temperatur gesteuert wird, die durch den Temperatursensor (4) ermittelt wird.

10. Speisenzubereitungsgerät nach einem der vorhergehenden Ansprüche, **dadurch gekennzeichnet, dass** der Thermistor (2) ein Kaltleiter ist und der Widerstand des Kaltleiters linear oder zumindest näherungsweise linear mit der Temperatur steigt.

11. Speisenzubereitungsgerät nach einem der vorhergehenden Ansprüche, **dadurch gekennzeichnet, dass** der Temperatursensor (4) als Sensor einen Heißleiter umfasst und der Widerstand des Heißleiters in Abhängigkeit von der Temperatur exponentiell verläuft.

12. Speisenzubereitungsgerät nach einem der vorhergehenden Ansprüche, **dadurch gekennzeichnet, dass** das Speisenzubereitungsgerät eine Kalibriereinrichtung umfasst, die so eingerichtet ist, dass der Thermistor (2) kalibriert wird.

13. Speisenzubereitungsgerät nach dem vorhergehenden Anspruch, **dadurch gekennzeichnet, dass** die Kalibriereinrichtung so eingerichtet ist, dass die Kalibriereinrichtung mithilfe des Temperatursensors (4) den Thermistor (2) kalibriert.

14. Speisenzubereitungsgerät nach einem der vorhergehenden Ansprüche, **dadurch gekennzeichnet, dass** das Speisenzubereitungsgerät ein Basisteil mit einer Steuerungseinheit und ein Speisenzubereitungsgefäß mit dem Thermistor (2) und dem Temperatursensor (4) umfasst, wobei das Speisenzubereitungsgefäß in das Basisteil eingesetzt werden kann, wobei die Steuerungseinheit so eingerichtet ist, dass diese das Erhitzen des Thermistors (2) und damit das Erhitzen des Speisenzubereitungsgefäßes in Abhängigkeit von der Temperatur steuern kann, die durch den Temperatursensor (4) ermittelt wird.

15. Speisenzubereitungsgerät nach dem vorhergehenden Anspruch, **dadurch gekennzeichnet, dass** im Speisenzubereitungsgefäß eine Information gespeichert ist, durch die ein Widerstand des Thermistors (2) in eine ermittelte Temperatur umgerechnet werden kann.
